Europäisches Patentamt

**European Patent Office**

Office européen des brevets

(11) Veröffentlichungsnummer: **0 070 015**
**B1**

(12) **EUROPÄISCHE PATENTSCHRIFT**

(45) Veröffentlichungstag der Patentschrift:
08.05.85

(51) Int. Cl.⁴: **A 01 D 43/08, A 01 D 43/06**

(21) Anmeldenummer: 82106174.4

(22) Anmeldetag: 12.07.82

(54) Automatische Lagesteuerung zur Einstellung des relativen Winkels zwischen dem Erntegutauswerfer einer Erntemaschine und einem schwenkbar angelenkten, das Erntegut aufnehmenden Wagen.

(30) Priorität: 13.07.81 US 282364

(43) Veröffentlichungstag der Anmeldung:
19.01.83 Patentblatt 83/3

(45) Bekanntmachung des Hinweises auf die Patenterteilung:
08.05.85 Patentblatt 85/19

(84) Benannte Vertragsstaaten:
AT BE CH DE FR GB IT LI NL SE

(56) Entgegenhaltungen:
GB - A - 2 073 914
US - A - 3 786 945
US - A - 4 042 132

(73) Patentinhaber: DEERE & COMPANY, 1 John Deere Road, Moline Illinois 61265 (US)

(72) Erfinder: Johnson, Stanley Jerome, 2706 Cedar Heights Drive, Cedar Falls Iowa 50613 (US)
Erfinder: Allen, David Thomas, 3725 Viking Road, Waterloo Iowa 50701 (US)
Erfinder: Baker, Keith Ronald, 2719 Edgemont Avenue, Waterloo Iowa 50702 (US)

(74) Vertreter: Fricke, Joachim, Dr. et al, Dr. R. Döring, Dr. J. Fricke, Patentanwälte Josephspitalstrasse 7, D-8000 München 2 (DE)

## Beschreibung

Die Erfindung betrifft eine automatische Lagesteuerung zur Einstellung des relativen Winkels zwischen dem Erntegutauswerfer einer Erntemaschine und einem nachgezogenen, schwenkbar angelenkten Wagen, der das ausgeworfene Erntegut aufnimmt, mit einer auf eine Differenz zwischen den Winkeln zwischen Auswerfer und Längsachse der Erntemaschine einerseits und zwischen dieser und der Längsachse des Wagens andererseits ansprechenden Steuereinrichtung zur automatischen Nachstellung des Auswerfers bei Kurvenfahrt.

Es sind bereits automatisch arbeitende Lagesteuerungen dieser Art bekannt (vgl. die US-PS 3 786 945 und 4 042 132). Diese dienen dazu zu verhindern, daß bei Kurvenfahrt der aus Zugmaschine, Erntemaschine und nachgeschlepptem Wagen bestehenden Fahreinheit das Erntegut aus dem Auswerfer an dem nachgezogenen Wagen vorbei auf das Feld ausgeworfen wird und damit verlorengeht.

Derartige Nachsteuervorrichtungen sind relativ kompliziert. Bei der einen bekannten Lagesteuerung (US-PS 3 786 945) erfolgt die Steuerung auf magnetischem Wege. Dieses System benötigt einen Signalerzeuger sowie Signalübertrager, Signalspulen und Phasendetektoren. Ein solches System ist aufwendig und kompliziert und erschwert auch eine gleichmäßige Beladung des angehängten Wagens.

Bei einem anderen bekannten Lagesteuerungssystem nach der US-PS 4 042 132 sind die Winkel abtastende Fühler vorgesehen, welche entsprechende elektrische Signale einem Komparator zuführen, der Licht aussendende Dioden aufweist, denen Fototransistoren zugeordnet sind, welche über Relais Schwenkmotoren für den Auswerfer betätigen.

Beide Systeme erfordern eine genaue Nachsteuerung des Schwenkwinkels des Auswerfers innerhalb eines schmalen Winkelbereiches in bezug auf den das Erntegut aufnehmenden Wagen, wenn die fahrende Einheit eine Kurve durchfährt.

Keines der beiden Systeme ermöglicht es ohne weiteres dem Fahrer bei der normalen Geradeausfahrt durch Verschwenken des Auswerfers die Verteilung des Erntegutes auf den Wagen zu beeinflussen und zu kontrollieren. Um eine solche Kontrolle zu ermöglichen benötigt das an zweiter Stelle genannte bekannte System eine mechanische Leerlaufeinrichtung, welche ein freies Winkelspiel zwischen dem Wagen und dem den Winkel zwischen Wagen und Erntemaschine erfassenden Fühler in begrenztem Maße zuläßt. Dieses mechanische Spiel vermindert jedoch bleibend die Empfindlichkeit des auf den Winkel ansprechenden Fühlers und damit die Genauigkeit der Steuerung. Damit kann auch bei der automatischen Steuerung bei diesem bekannten System die Nachfolgesteuerung des Auswerfers den Auswerfer nur auf einen dem mechanischen Spiel entsprechenden Winkel genau einsteuern. Damit treten auch innerhalb der Kurvenfahrt erhebliche Fluchtungsfehler zwischen dem Auswerfer und dem nachgezogenen Wagen auf mit der Gefahr, daß ein Teil des Erntegutes am Wagen vorbei auf das Feld fällt. Dies beruht wesentlich darauf, daß der Winkel dieses freien mechanischen Spiels über alle relativen Lagen zwischen Erntemaschine und Wagen konstant bleibt. Schließlich benötigt diese bekannte Anordnung noch einen besonderen Auswahlschalter, der durch den Fahrer betätigt werden muß, um von der Handsteuerung auf die automatische Steuerung und umgekehrt zurückzuschalten. Das System ist also sehr aufwendig und damit störanfällig und benötigt eine relativ große Aufmerksamkeit für den das System bedienenden Fahrer.

Es ist Aufgabe der Erfindung hier Abhilfe zu schaffen und eine automatische Lagesteuerung vorzusehen, welche während der Kurvenfahrt eine sehr genaue Nachsteuerung des Auswerfers auf den Wagen gewährleistet und dennoch dem Fahrer eine freie Verschwenkbarkeit des Auswerfers über einen relativ großen Winkelbereich während der normalen Geradeausfahrt gestattet, ohne daß der Fahrer besondere Aufmerksamkeit auf die Umschaltung zwischen genauer Nachsteuerung und freier Verschwenkbarkeit des Auswerfers aufwenden muß.

Diese Aufgabe wird gemäß der Erfindung gelöst durch eine Einrichtung zur automatischen Veränderung der Ansprechempfindlichkeit der Steuereinrichtung in Abhängigkeit von dem Winkel zwischen den Längsachsen von Wagen und Erntemaschine, die so ausgebildet ist, daß die Ansprechempfindlichkeit der Steuereinrichtung auf einen niedrigeren Wert in einem der Geradeausfahrt entsprechenden Winkelbereich zwischen den Längsachsen von Erntemaschine und Wagen und auf einen demgegenüber höheren Wert bei Kurvenfahrt einsteuerbar ist.

Der niedrigere Wert der Ansprechempfindlichkeit der Steuereinrichtung bei Geradeausfahrt ist zweckmäßigerweise so bemessen, daß der Auswerfer gegenüber der Erntemaschine über einen zur gleichförmigen Beladung des Wagens ausreichenden Winkel verschwenkbar ist, ohne daß die Steuereinrichtung anspricht, während der höhere Wert der Ansprechempfindlichkeit bei der Kurvenfahrt so bemessen ist, daß Erntegutverluste ausgeschaltet sind.

Die neue automatische Lagesteuerung gestattet es dem Fahrer den Auswerfer über einen weiten Winkelbereich willkürlich zu verschwenken, um so den Füllvorgang an dem nachgezogenen Wagen zu beeinflussen und so eine gleichförmige Wagenbeladung zu gewährleisten, wenn die Erntemaschine und der Wagen sich im Zustand normaler Geradeausfahrt befindet. Dies wird erreicht, ohne daß die automatische Lagesteuerung abgeschaltet oder ein Steuerungsmodusschalter betätigt werden muß.

Die neue automatische Lagesteuerung gestattet es den zuvor genannten Vorteil durch Veränderung der Ansprechempfindlichkeit der Steuereinrichtung zu erzielen und zwar in Abhängigkeit von der Abweichung der Lage des Wagens von der Fluchtungsstellung gegenüber der Erntemaschine. Die Umschaltung auf hohe oder niedrige Werte der Ansprechempfindlichkeit erfolgt dabei automatisch in Abhängigkeit von großen bzw. kleinen Winkeln zwischen den Längsachsen von Erntemaschine und nachgeschlepptem Wagen.

Trotz der freien Verschwenkbarkeit des Auswerfers während der Geradeausfahrt gewährleistet die automatische Lagesteuerung eine enge Nachsteuerung des Winkels des Auswerfers in Abhängigkeit von den Winkeln zwischen den Längsachsen von Erntemaschine und nachgezogenem Wagen. Damit werden Ernteverluste während der Kurvenfahrt praktisch völlig ausgeschlossen. Die willkürliche Verschwenkbarkeit des Auswerfers wird damit bei Kurvenfahrt zunehmend ausgeschaltet und zwar in Abhängigkeit von der Zunahme des Fluchtungsfehlers zwischen Erntemaschine und Wagen.

Die neue automatische Lagesteuerung bietet den weiteren Vorteil, daß der Fluchtungsfehler zwischen Auswerfer und nachgezogenem Wagen auf einen wesentlich kleineren Betrag eingesteuert werden kann, als der Betrag des Fluchtungsfehlers, der anfänglich die Nachsteuerung des Auswerfers aufgrund von Fluchtungsfehlern überhaupt erst auslöst.

Die automatische Lagesteuerung kann vorteilhafterweise auch auf Fehler ansprechende Kreise aufweisen, welche die mögliche Bewegung des Auswerfers begrenzen, welche Bewegung an sich durch das Steuersystem durch Ansprechen auf solche fehlerhaften Zustände veranlaßt würden.

Als Fühler für die Winkel können mit einem verstellbaren Potentiometer arbeitende Fühler eingesetzt werden. Der Steuerkreis umfaßt insb. einen Differentialverstärker mit variablem Verstärkungsfaktor. Dieser Verstärker erzeugt ein Fehlersignal, das im wesentlichen aus der Differenz zwischen den gefühlten Winkeln besteht. Der Verstärkungsfaktor wird zur Modifikation des Fehlersignals herangezogen. Durch die Veränderung des Verstärkungsfaktors in Abhängigkeit von dem Winkel zwischen der Erntemaschine und dem Wagen kann die Größe des Fehlersignals auf einfache und zuverlässige Weise und leicht veränderlich variiert werden. Weiterhin werden zweckmäßigerweise Komparatoren mit deutlicher Hysteresis verwendet, welche einen üblichen elektrohydraulischen Schwenkkreis zum Verschwenken des Auslasses betätigt und zwar in Abhängigkeit von der Größe des Fehlersignals. Der automatische Steuerkreis sowie ein manuell betätigbarer richtungsabhängiger Steuerschalter sind beide permanent und kontinuierlich mit den Eingängen des üblichen elektrohydraulischen Schwenksystems verbunden.

Die Erfindung wird nachfolgend anhand schematischer Zeichnungen an einem Ausführungsbeispiel näher erläutert.

Es zeigt

Fig. 1 in Draufsicht eine typische Erntemaschine mit einem das Erntegut aufnehmenden, schwenkbar angelenkten Wagen.

Fig. 2 in einer vereinfachten schematischen Wiedergabe die Lagesteuerung einschließlich der automatischen Steuereinheit und

Fig. 3a und 3b zusammen und im einzelnen den Schaltkreis der automatischen Steuereinrichtung gemäß Fig. 2.

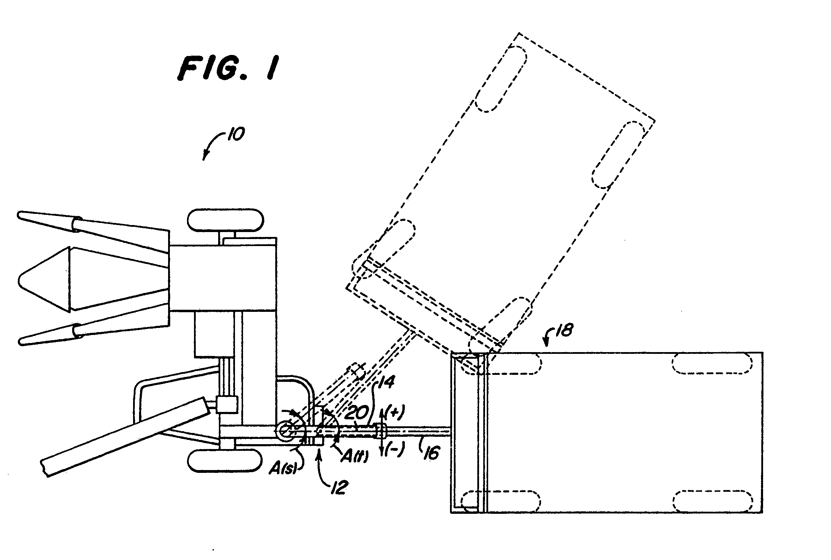

In Fig. 1 ist eine durch einen Ackerschlepper gezogene Erntemaschine 10 oder aber eine selbstfahrende Erntemaschine (nicht gezeigt) vorgesehen. Diese umfaßt eine Zugstange und einen schwenkbaren Erntegutauswerfer 14. Die Deichsel 16 eines angehängten Wagens 18, z. B. eines vierrädrigen oder eines zweirädrigen Wagens ist an die Zugstange 12 angelenkt, so daß der Wagen 18 das aus dem Auswerfer 14 austretende Gut aufnehmen kann. Ein Winkel A(s) ist als der relative Winkel angezeigt, der zwischen dem Auswerfer 14 und der Längsachse 20 der Erntemaschine 10 gebildet wird. Ein weiterer Winkel A(t) ist angegeben als der relative Winkel zwischen der Achse der Wagendeichsel 16 und der Achse 20.

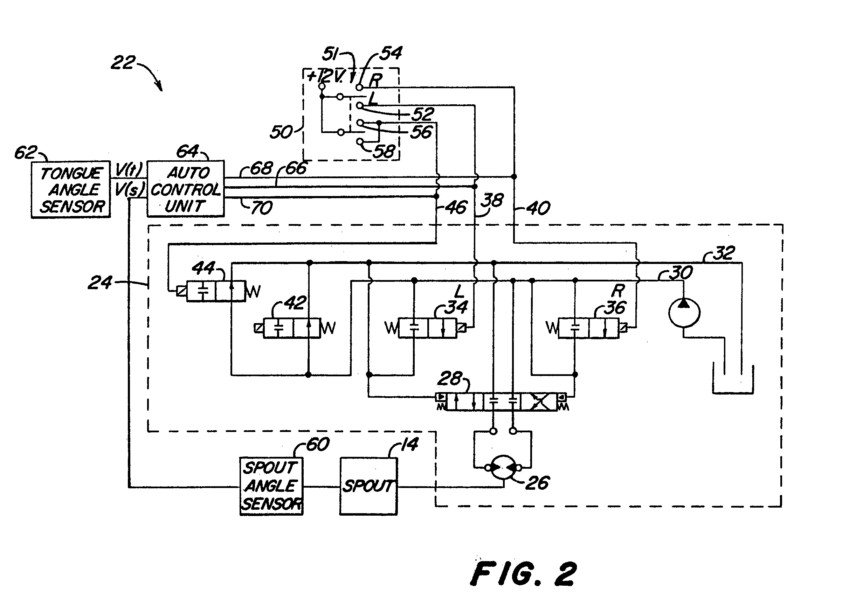

Eine automatische Lagesteuerung 22 nach Fig. 2 steuert die Lage des Auswerfers 14 und zwar entweder automatisch oder über Handbetrieb in Abhängigkeit von Steuersignalen, die einem üblichen elektrohydraulischen Betätigungs- oder Schwenkkreis 24 zugeführt wird. Der Kreis 24 umfaßt einen üblichen, in zwei Richtungen betreibbaren Fluidmotor 26, um den Auswerfer 14 entweder nach links oder nach rechts gemäß Fig. 1 zu verschwenken. Das Verschwenken erfolgt in Abhängigkeit von der Zuführung des Fluids von einem vorgesteuerten Richtungssteuerventil 28, das an eine Druckleitung 30 und eine Rücklaufleitung 32 einer Pumpe angeschlossen ist. Linke und rechte, durch Elektromagneten gesteuerte Ventile 34 und 36 betätigen das Richtungssteuerventil 28 in Abhängigkeit von Steuersignalen, die über linke und rechte Steuerleitungen 38 bzw. 40 zugeführt werden. Zum Betreiben in Verbindung mit einem hydraulischen System (nicht gezeigt) mit offenem Zentrum umfaßt der Kreis 24 wahlweise ein vorgesteuertes Bypass-Ventil 42, das durch ein elektromagnetisch gesteuertes Ventil 44 überwacht wird. Dieses empfängt seine Steuersignale über die Kontroll-Leitung 46. Es wird bemerkt, daß es im Rahmen der vorliegenden Erfindung liegt, anstelle des hydraulischen Motors 26 einen elektrisch betriebenen Motor zu verwenden und anstelle des hydraulischen Betätigungskreises 24 einen entsprechenden elektrischen Betätigungskreis.

Eine manuell betätigbare Richtungskontrolle ist mit Hilfe einer Schaltungseinheit 50 möglich. Diese umfaßt einen doppelpoligen zweiwegigen Tippschalter 51. Eine Seite der beiden Pole ist mit dem +12-Volt-Anschluß der Fahrzeugbatterie oder einer anderen Kraftquelle verbunden. Die linken und rechten Schaltkontakte 52 und 54 sind mit der linken und der rechten Eingangs- oder Steuerleitung 38 bzw. 40 verbunden. Die wahlweise vorgesehenen Kontakte 56 und 58 sind beide mit einer Steuerleitung 46 verbunden, so daß das Ventil 44 betätigt wird, um das Ventil 42 zu schließen, jedesmal wenn der Schalter 51 mit den Kontakten 52 oder 54 in Verbindung steht.

Die Lagesteuerung 22 umfaßt weiterhin einen Fühler 60 für den Winkel des Auswerfers im Vergleich zur Erntemaschine und einen Fühler 62 für den Winkel der Deichsel 16 gegenüber der Erntemaschine. Beide Fühler können übliche Drehpotentiometer sein, die so angeschlossen sind, daß sie Spannungen V(s) und V(t) erzeugen, die den Winkel A(s) des Auswerfers bzw. den Winkel A(t) der Deichsel 16 anzeigen. Die den Auswerferwinkel wiedergebende Spannung V(s), die durch den Fühler 60 erzeugt wird, kann als Rückführungssignal für die automatische Steuereinrichtung 64 angesehen werden. Diese automatische Steuereinrichtung 64 erzeugt linke und rechte Steuersignale in den Ausgangsleitungen 66 und 68 sowie in der Ausgangsleitung 70, und zwar als Funktion oder in Abhängigkeit von den Winkeln der Deichsel bzw. des Auswerfers. Ausgangsleitungen 66, 68 und 78 sind an die Steuerleitung 38, 40 und 46 angeschlossen.

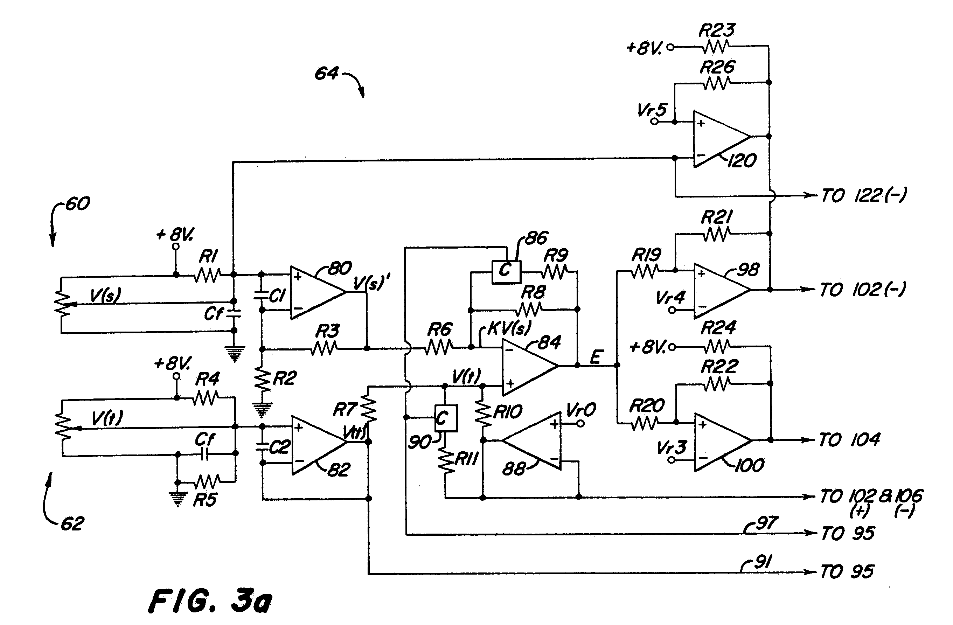

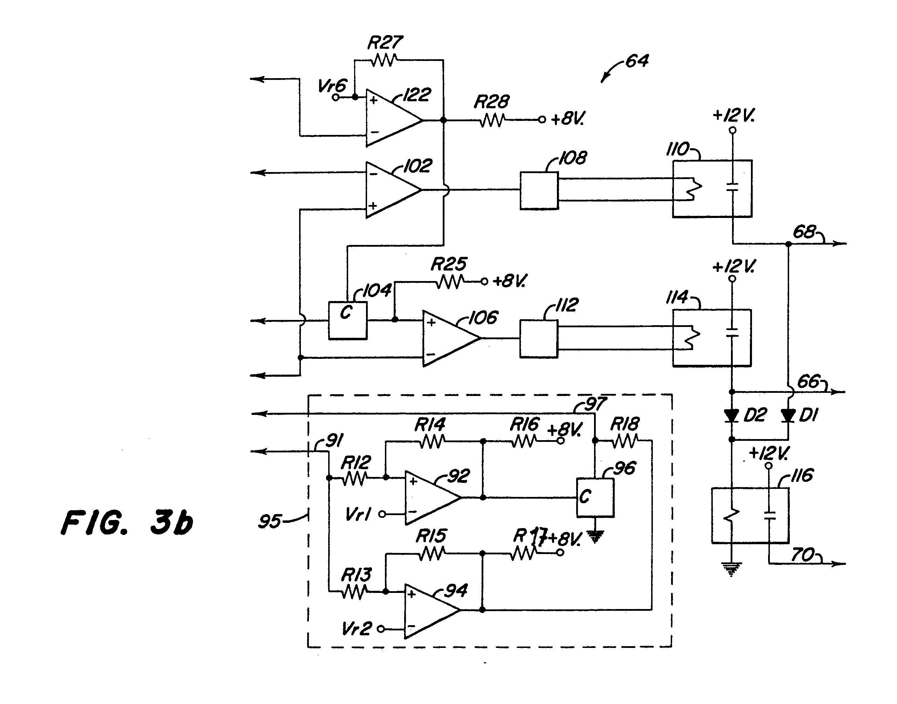

Gemäß der Fig. 3 umfaßt jeder Fühler 60 und 62 einen Widerstand, der zwischen einer Spannungsquelle von beispielsweise +8 Volt und Erde liegt. Der Abgriff des Fühlers 60 ist mit dieser Spannungsquelle über den Widerstand $R_1$ und mit dem (+)-Eingang eines Trennverstärkers 80 verbunden, dessen Verstärkungsfaktor K = 1,18 beträgt.

Die Spannung V(s) repräsentiert den Winkel A(s) des Auswerfers und wird multipliziert durch den Verstärkungsfaktor 1,18, um dem Umstand Rechnung zu tragen, daß der Schwenkpunkt des Auswerfers 14 vor dem Schwenkpunkt der Deichsel 16 liegt. Das bedeutet, daß zu einer genauen Nachfolge bezüglich der Bewegungen des Wagens 18 der Auswerfer 14 der Letztere nur über einen Winkel von annähernd 85% (1 : 1,18) des Winkels verschwenkt werden muß, mit dem der Wagen 18 gegenüber der Erntemaschine ausgeschwungen wird. Natürlich hängt der genaue Wert des Verstärkungsfaktors K ab von den relativen Längen von Auswerfer und Deichsel und von dem Abstand zwischen ihren jeweiligen Anlenkpunkten. Der (−)-Einlaß des Verstärkers 80 ist mit dessen (+)-Eingang über einen zur Filterung dienenden Kondensator $C_1$, mit Erde über den Widerstand $R_2$ und mit seinem Auslaß über den Widerstand $R_3$ verbunden.

Der Abgriff des Fühlers 62 ist mit einer Spannungsquelle von +8 Volt über Widerstand R4, mit dem (+)-Einlaß eines Trennverstärkers (82) mit dem Verstärkungsfaktor 1 und mit Erde über Widerstand $R_5$ verbunden. Der (−)-Eingang des Trennverstärkers 82 ist mit seinem Auslaß und mit seinem (+)-Einlaß über einen Filterkondensator $C_2$ verbunden. Zum Schutz gegen Rundfunkfrequenzen können nicht dargestellte Ferritelemente über die Leiter zwischen den Fühlern 60 und 62 und den korrespondierenden Trennverstärkern 80 und 82 eingesetzt werden. Es kann auch wünschenswert sein, zusätzliche Filterkondensatoren Cf, von denen einige gezeigt sind, zwischen diesen Leitern und Erde anzuordnen, um einen weiteren Schutz gegen Radiofrequenz-Einflüsse zu erhalten.

Als Beispiel wird angeführt, daß die Fühler 60 und 62 so einjustiert sind, daß dann, wenn der Auswerfer 14 und die Deichsel 16 parallel zu der Längsachse 20 der Erntemaschine 10 verlaufen, d. h. wenn der Winkel

$$A(s) = A(t) = 0°$$

ist, die Spanungen Vs' und Vt' an den Ausgängen der Trennverstärker 80 und 82 beide gleich 3,5 Volt sind. Spannungsniveaus, die größer als 3,5 Volt sind, entsprechen einer Situation, in der der Auswerfer 14 und die Deichsel 16 sich in einer Stellung rechts von dieser Achse 20 befinden, wie dies Fig. 1 zeigt. Winkel A(s) und A(t) sind zum Zwecke der Beschreibung hier als positive Winkel angegeben. Umgekehrt zeigen Spannungen kleiner als 3,5 Volt negative Winkel A(s) und A(t) an, bei denen sich der Auswerfer 14 und die Deichsel 16 links von der Achse 20 mit Blickrichtung gemäß Fig. 1 befinden. Das spezielle Spannungsniveau von 3,5 Volt ist lediglich als Beispiel angegeben. Es ist jedoch eine Spannung gewählt, die keinen Null-Wert als Mittelwert hat, um die Notwendigkeit einer bipolaren Spannungszufuhr zu vermeiden.

Die Ausgänge der Trennverstärker 80 und 82 sind mit den (−)- und (+)-Eingängen eines Differentialverstärkers 84 über gleiche Widerstände R6 bzw. R7 verbunden. Ein aus Widerstand und Schalter bestehender Schaltkreis umfaßt Widerstände R8 und R9 und einen CMOS-Schalter 86. Dieser liegt zwischen dem (−)-Einlaß und dem Auslaß des Verstärkers 84. Der (+)-Einlaß des Verstärkers 84 ist mit einem Auslaß eines Trennverstärkers 88 mit dem Verstärkungsfaktor 1 über Widerstand R10 verbunden, der parallel mit dem CMOS-Schalter 90 und einem Widerstand R11 angeordnet ist. Eine Bezugsspannung Vr0 wird an den (+)-Einlaß des Trennverstärkers 88 angelegt. Der (−)-Einlaß des Trennverstärkers 88 ist mit dessen Auslaß verbunden. Auf diese Weise erzeugt der Differentialverstärker 84 eine Fehlerspannung

$$E = A(V(t) − KV(s)) + 3,5.$$

Diese liegt am Auslaß an. In dieser Gleichung bedeutet A den Verstärkungsfaktor, der abhängig ist vom Zustand der Schalter 86 und 90. Beispielsweise beträgt A 1,67, wenn beide Schalter 86 und 90 geschlossen sind. Dagegen ist A = 10, wenn beide Schalter 86 und 90 offen sind. In jedem Fall ist die Fehlerspannung E = 3,5 Volt, wenn der Winkel der Deichsel A(t) = 1,18 A(s) ist.

Die Spannung V(t) für den Deichselwinkel wird vom Auslaß des Trennverstärkers 82 mit den

( + )-Einlässen der Niveaukomparatoren 92 und 94 zugeführt, die einem bistabilen Schaltkreis 95 zur Steuerung des Verstärkungsfaktors angehören. Die Zuführung erfolgt über Leiter 91 und identische Widerstände R12 und R13. Die Auslässe der beiden Komparatoren 92 und 94 sind jeweils mit ihren Einlässen über identische Widerstände R14 und R15 und mit der Spannungsquelle von +8 Volt über identische Widerstände R16 und R17 verbunden. Der (−)-Einlaß des Komparators 92 ist so angeschlossen, daß er eine Bezugsspannung Vrl = 3,73 Volt empfängt. Der (−)-Einlaß des Komparators 94 ist so angeschlossen, daß er eine Bezugsspannung Vr2 = 3,23 Volt empfängt. Der Auslaß des Komparators 92 ist so verbunden, daß er den Einlaß C des CMOS-Schalters 96 steuert. Dieser umfaßt einen geerdeten Anschluß und einen nicht geerdeten Anschluß, der mit dem Auslaß des Komparators 94 über Widerstand R18 und mit den Kontrolleingängen C der CMOS-Schalter 86 und 90 über Leitung 97 verbunden ist.

Die Fehlerspannung E vom Auslaß des Differentialverstärkers 84 ist mit den (+)-Eingängen der Fehlerkomparatoren 98 und 100 über identische Widerstände R19 und R20 verbunden. Eine Bezugsspannung Vr3 = 3,02 Volt ist an den (−)-Einlaß des Komparators 100 angelegt, während eine Bezugsspannung Vr4 = 4,06 Volt an den (−)-Einlaß des Komparators 98 angelegt ist. Die Ausgänge der Komparatoren 98 und 100 sind mit ihren (+)-Eingängen über identische Widerstände R21 und R22 und mit der Spannungsquelle von +8 Volt über identische Widerstände R23 und R24 verbunden.

Der Auslaß des Komparators 98 ist außerdem mit dem (−)-Einlaß einer Umkehreinrichtung 102 verbunden. Der Auslaß des Komparators 100 ist über den normalerweise geschlossenen CMOS-Schalter 104 mit dem (+)-Einlaß eines Trennverstärkers 106 und mit einer Spannungsquelle von +8 Volt über Widerstand R25 verbunden. Die Komparatoren 98 und 100 arbeiten als bistabile Schalteinrichtungen mit hohen oder niedrigen Auslaßniveaus in Abhängigkeit vom Zustand ihrer Eingänge. Der (−)-Einlaß des Trennverstärkers 88 ist mit dem (+)-Einlaß der Umkehreinrichtung 102 und mit dem (−)-Einlaß des Trennverstärkers 106 verbunden.

Der Auslaß der Umkehreinrichtung 102 ist mit einem Relais-Treiber 108 verbunden, der das Relais 110 steuert. Dieses öffnet oder schließt, um die Spannungsquelle von +12 Volt mit der Ausgangsleitung 68 und mit der Anode einer Diode D1 zu verbinden. Der Auslaß des Trennverstärkers 106 ist mit einem Relais-Treiber 112 zur Steuerung des Relais 114 verbunden, welches öffnet oder schließt, um die genannte Spannungsquelle mit der Ausgangsleitung 66 und mit der Anode einer Diode D2 zu verbinden. Die Katoden der beiden Dioden D1 und D2 sind so geschaltet, daß sie das Relais 116 steuern, welches die Spannungsquelle von +12 Volt mit der Ausgangsleitung 70 verbindet. Somit schließt das Relais 116 jedesmal wenn eines oder beide der Relais 110 oder 114 geschlossen sind.

Der Abgriff des Fühlers 60 ist außerdem mit den (−)-Einlässen der Komparatoren 120 und 122 verbunden. Eine Bezugsspannung Vr5 = 5,34 Volt ist mit dem (+)-Einlaß des Komparators 120 und eine Bezugsspannung von Vr6 = 6,28 Volt ist mit dem (+)-Einlaß des Komparators 122 verbunden. Der Auslaß der beiden Komparatoren 120 und 122 ist mit den jeweiligen Einlässen über identische Widerstände R26 und R27 verbunden. Der Auslaß des Komparators 120 ist außerdem an dem (−)-Einlaß der Umkehreinrichtung 102 angeschlossen. Der Auslaß des Komparators 122 ist über Widerstand R28 mit der Spannungsquelle von +8 Volt und mit dem Steuereinlaß C des CMOS-Schalters 104 verbunden.

Die automatische Lagesteuerung gemäß der Erfindung arbeitet wie folgt:

Wenn der Auswerfer 14 und die Deichsel 16 sich nicht in paralleler Fluchtung befinden, z. B. die Deichsel 16 rechts von dem Auswerfer 14 liegt, wenn man die Verhältnisse von Figur 1 zugrunde legt, dann nimmt der Winkel A(t) der Deichsel in bezug auf den Winkel A(s) des Auswerfers zu. Die Folge ist eine Zunahme der Fehlerspannung E am Auslaß des Differentialverstärkers 84 von dem normalen Grundwert von 3,5 Volt. Diese Zunahme des Fehlersignals E führt dazu, daß der normalerweise niedrige Ausgangswert des Niveaukomparators 98 auf einen höheren Wert ansteigt, der über die Umkehreinrichtung 102 und den Relais-Treiber 108 dazu führt, daß das Relais 110 schließt und die Ausgangsleitung 68 eingeschaltet wird. Das Einschalten der Ausgangsleitung 68 öffnet das Vorsteuerventil 36, welches das Richtungssteuerventil 28 betätigt, um unter Druck stehendes Fluid dem Fluidmotor 26 zuzuführen. Dieser schwenkt den Auswerfer 14 nach rechts oder im Gegenuhrzeigersinne, bezogen auf Figur 1. Diese Verschwenkung setzt sich fort, bis der Auswerferwinkel A(s) einen Wert von 0,85 mal dem Deichselwinkel A(t) annimmt. Wenn der Auswerfer 14 seine genaue vorgesehene Winkelbeziehung zu der Deichsel 16 einnimmt, nimmt das Fehlersignal E ab. Der Auslaß des Niveaukomparators 98 kehrt auf den normalen niedrigen Wert zurück. Das Relais 110 fällt ab und schaltet die Ausgangsleitung 68 ab. Das Richtungssteuerventil 28 schließt und verhindert jede weitere Bewegung des Auswerfers 14. Damit wird die Fluchtungsstellung zwischen Auswerfer 14 und Deichsel 16 aufrechterhalten, bis die Deichsel erneut eine Schwenkbewegung ausführt.

In ähnlicher Weise liegen die Verhältnisse, wenn die Deichsel 16 sich links von dem Auswerfer 14 befindet. In diesem Fall wird die Fehlerspannung E gegenüber dem Mittelwert 3,5 Volt verringert. Die Verringerung der Fehlerspannung E führt dazu, daß das normalerweise hohe Auslaßniveau des Niveaukomparators 100 auf einen niedrigen Wert absinkt. Dadurch wird das Relais 114 über den normalerweise geschlossenen Schalter 104, den Trennverstärker 106 und den Relais-Treiber 112 geschlossen. Das Schließen des Relais 114 schaltet die Ausgangsleitung 66 ein, wodurch das Vorsteuerventil 34 öffnet und das Steuerventil 28 betätigt wird, um unter Druck stehendes Fluid dem Motor 26 zuzuführen. Dieser schwenkt den Auswerfer 14 nach links oder im Uhrzeigersinne, bezogen auf Fig. 1. Dabei wird der Auswerfer 14 in die genaue Winkelbeziehung zu der Deichsel 16 zurückgeführt. In diesem Augenblick hat die Fehlerspannung ausreichend zugenommen, um zu veranlassen, daß der Auslaß des Niveaukomparators 100 auf den normalerweise hohen Wert zurückkehrt. Dadurch fällt das Relais 114 ab und jede weitere Bewegung des Auswerfers 14 wird verhindert.

Es wird darauf hingewiesen, daß entweder der Niveaukomparator 98 oder der Niveaukomparator 100 seinen Zustand ändert, um eine Korrektur der Stellung des Auswerfers auszulösen, wenn die Größe der Winkeldifferenz zwischen dem Deichselwinkel A(t) und dem 1,18fachen des Auswerferwinkels A(s) ein Maximum des Abweichungswinkels erreicht, der mit MA(max) bezeichnet wird. In diesem Augenblick wird entweder der Niveaukomparator 98 oder der Niveaukomparator 100 wieder in den ursprünglichen Zustand zurückwechseln, um eine weitere Korrektur der Stellung des Auswerfers zu verhindern, wenn die Größe der Winkeldifferenz einen minimalen Abweichungswert erreicht, der mit MA(min) bezeichnet wird. Die besonderen Werte der Abweichungswinkel MA(max) und MA(min) werden durch die Bezugsspannungsniveaus Vr4 und Vr3, durch die zugehörige Hysteresis der Niveaukomparatoren 98 und 100 sowie durch die Größe des Verstärkungsfaktors A des Differentialverstärkers 84 bestimmt. Wenn beispielsweise ein niedriger Verstärkungsfaktor von A = annähernd 1,67 vorliegt, betragen MA(max) = 18° und MA(min) = 2°. Das bedeutet, daß keine Korrektur der Stellung des Auswerfers stattfindet, bis die Winkeldifferenz zwischen dem Auswerfer und der Deichsel einen Wert von 18° überschreitet. Danach wird die Stellung des Auswerfers in einem Grenzbereich oder Toleranzbereich von 2°, bezogen auf den Winkel der Deichsel 16, korrigiert. Bei einem hohen Verstärkungsfaktor von A = etwa 10 betragen MA(max) etwa 3° und MA(min) etwa $1/3°$. Das bedeutet, daß der Betrag des zulässigen freien Spiels oder der Fluchtungsabweichung zwischen dem Auswerfer 14 und der Deichsel 16 variiert werden kann durch Veränderung des Verstärkungsfaktors A des Differentialverstärkers 84.

Insbesondere wird der Verstärkungsfaktor A des Differentialverstärkers 84 durch den Deichselwinkel A(t) durch die Betätigung der zur Steuerung des Verstärkungsfaktors dienenden bistabilen Schaltkreise 95 und die Schalter CMOS 86 und 90 gesteuert. Wenn beispielsweise der Deichselwinkel A(t) = 0° ist, wird eine Spannung V(t) = 3,5 Volt an die (+)-Einlässe der Komparatoren 92 und 94 angelegt. Der Auslaß des Komparators 92 ist entsprechend niedrig, während der Auslaß des Komparators 94 einen hohen Wert einnimmt. Der Schalter 96 ist offen. Die Spannung in der Leitung 97 weist einen hohen Wert auf. Beide Schalter 86 und 90 sind geschlossen. Der Differentialverstärker 84 weist einen relativ niedrigen Verstärkungsfaktor von A = 1,67 auf, wobei dieser Wert als Beispiel angegeben ist. Mit diesem relativ niedrigen Verstärkungsfaktor arbeitet das Steuersystem in einer Betriebsweise mit geringer Ansprechempfindlichkeit. Die Fehlerspannung E wird beispielsweise den Zustand der Niveaukomparatoren 98 oder 100 nicht ändern, bis der Auswerfer 14 und die Deichsel 16 eine Winkelabweichung von mindestens 18° aufweisen. Dies ermöglicht es der Bedienungsperson, mittels Hand den Auswerfer hin und zurück zu schwenken, um in bezug auf den Wagen 18 eine gleichförmige Beladung während der normalen Geradeausfahrt zu gewährleisten, ohne daß der automatische Steuerkreis 64 dabei abgeschaltet ist. Wenn dagegen der Fluchtungsfehler zwischen Auswerfer 14 und Deichsel 16 größer als 18° wird, während weiterhin die Deichsel nur eine kleine Winkelabweichung gegenüber der Erntemaschine aufweist, dann ändert entweder der Niveaukomparator 98 oder der Komparator 100 den Zustand. Die Folge ist, daß der Auswerfer 14 so weit verschwenkt wird, bis der Auswerfer 14 innerhalb von 2° Abweichungsmöglichkeit auf die Deichsel 16 ausgerichtet ist, wie dies zuvor beschrieben worden ist. An diesem Punkt schaltet entweder der Komparator 98 oder der Komparator 100 in den ursprünglichen Zustand zurück, um eine weitere Verschwenkung des Auswerfers zu verhindern. Die maximal zulässige Abweichung zwischen Auswerfer und angehängtem Wagen (im vorliegenden Fall von 18°) kann variiert werden in Abhängigkeit von der Breite des das Erntegut aufnehmenden Wagens 18 und der Länge der Deichsel 16 des Wagens.

Es wird nun angenommen, daß der Winkel der Deichsel gegenüber der Längsrichtung der Erntemaschine auf +11° oder auf einen größeren Wert zugenommen hat. An dieser Stelle bleibt der Auslaß des Komparators 94 auf einem hohen Niveau. Der Auslaß des Komparators 92 nimmt jedoch ebenfalls einen hohen Wert an. Es schließt der CMOS-Schalter 96 und erdet die Leitung 97. Beide Schalter 86 und 90 öffnen. Der Verstärkungsfaktor A des Differentialverstärkers 84 wird auf A = 10 erhöht. Mit diesem hohen Wert des Verstärkungsfaktors arbeitet das Steuersystem mit einer sehr hohen Ansprechempfindlichkeit. Beispielsweise ändert entweder der Niveaukomparator 98 oder der Komparator 100 seinen Zustand, um die Stellung des Auswerfers in Abhängigkeit von der Fehlerspannung E zu korrigieren. Die Fehlerspannung repräsentiert einen Fluchtungsfehler zwischen Auswerfer und Deichsel von MA(max) von nur 3°. Danach schaltet entweder der Komparator 98 oder der Komparator 100 zurück in den ursprünglichen Zustand, wenn der Fluchtungsfehler zwischen Auswerfer und Deichsel auf den Wert von MA(min) von $1/3°$ korrigiert ist. In dieser Weise wird der relative Winkel zwischen dem Auswerfer 14 und der Deichsel 16 in einem Bereich von 3° maximal und $^1/_3$° minimal gehalten. Dies geschieht, wenn der Winkel A(t) der Deichsel gegenüber der Erntemaschine relativ groß ist. Dies ist dann der Fall, wenn die Erntemaschine 10 eine Kurve fährt. Dies ist sehr wünschenswert, da während der relativ kurzen Zeit einer solchen Kurvenfahrt ein Ladeausgleich bezüglich des angehängten Wagens nicht erforderlich ist und der Fahrer ohnehin darauf konzentriert ist die Erntemaschine 10 und den Wagen 18 ordnungsgemäß durch die Kurve zu steuern. Es wird somit deutlich, daß der Verstärkungsfaktor A des Differentialverstärkers 84 verändert wird, um den Betrag der zulässigen Abweichung zwischen Auswerfer und Deichsel zu verändern, und zwar in Abhängigkeit von dem relativen Winkel zwischen der Deichsel 16 des Wagens und der Zugstange 12 oder der Längsachse der Erntemaschine. Die maximal zulässige Abweichung während der Arbeitsweise mit hohem Verstärkungsfaktor wird in Abhängigkeit von der Wagenbreite und der Länge der Deichsel gewählt, und zwar so, daß ein Verstreuen des Erntegutes ausgeschlossen ist, wenn die Erntemaschine 10 und der Wagen 18 Kurvenfahrten ausführen.

Damit kann die vorliegende automatische Lagesteuerung als ein automatisches Feedback-Steuersystem mit variabler Ansprechempfindlichkeit bezeichnet werden, welches die Lage des Auswerfers als Funktion der Differenz zwischen dem Winkel von Auswerfer und Erntemaschine einerseits und Erntemaschine und angehängtem Wagen andererseits steuert. Die Ansprechempfindlichkeit der Lagesteuerung hängt ab von dem Verstärkungsfaktor A des Differentialverstärkers 84, welcher wiederum abhängig ist von dem Winkel zwischen dem Wagen und der Erntemaschine. Während die neue Lagesteuerung gewährleistet, daß der Fluchtungsfehler zwischen Auswerfer und Wagen Werte bis zu 18° oder bis zu 3° erreichen darf, und zwar in Abhängigkeit von dem eingesetzten Verstärkungsfaktor, wird gewährleistet, daß dann, wenn diese Grenzwerte einmal überschritten sind, das Steuersystem so arbeitet, daß der Fluchtungsfehler zwischen Auswerfer und angehängtem Wagen auf einen viel kleineren Wert von z. B. 2° bzw. $^1/_3$° begrenzt wird. Dieses Ergebnis ist möglich, da die maximalen Fehlerniveaus nicht durch Verwendung von mechanischen Leerlaufeinrichtungen verwirklicht werden, welche die Ansprechempfindlichkeit der Winkelfühler 60 oder 62 herabsetzen. Statt dessen wird der Unterschied zwischen den zulässigen maximalen und minimalen Fluchtungsfehlern elektronisch durch die Hysteresis in den Niveaukomparatoren 98 und 100 erzeugt.

Wenn die Erntemaschine 10 und der Wagen aus einer Kurve herauskommen nimmt der Deichselwinkel A(t) ab, wenn der Wagen 18 allmählich in Fluchtungsstellung hinter der Erntemaschine 10 gelangt. Wenn der Deichselwinkel A(t) auf 4° oder niedriger absinkt ändert der Komparator 92 oder der Steuerkreis 95 für den Verstärkungsfaktor seinen Schaltzustand, öffnet den Schalter 96 und hebt die Spannung in der Leitung 97 unter dem Einfluß des Komparators 94 an, dessen Auslaß einen hohen Wert aufweist. Dies führt zu einem erneuten Schließen der Schalter 98 und 90. Damit wird der Differentialverstärker 84 wieder auf den niedrigen Verstärkungsfaktor (A = 1,67) zurückgeführt. Damit wird die niedrige Ansprechempfindlichkeit, wie sie zuvor beschrieben ist, erreicht, bei der der Winkel zwischen Deichsel und Auswerfer ohne Ansprechen der automatischen Lagesteuerung im Bereich zwischen 18° und 2° verbleiben kann. Der besondere Deichselwinkel A(t), bei dem der Komparator 92 seinen Zustand ändert, um den Verstärkungsfaktor A des Differentialverstärkers 84 zu verändern, ist abhängig von dem Niveau der Bezugsspannung Vr1 und der vorgesehenen Hysteresis des Komparators 92.

Die neue Lagesteuerung arbeitet in der gleichen Weise, wenn die Deichsel 16 sich links von der Achse 20 der Erntemaschine befindet, bezogen auf Fig. 1, in welchem Zustand die Spannung V(t) einen negativen Deichselwinkel A(t) repräsentiert. In diesem Fall wird jedoch dann, wenn der Deichselwinkel A(t) von 0° auf z. B. −11° geändert wird, der Auslaß des Komparators 94 des den Verstärkungsfaktor steuernden Kreises 95 von einem hohen auf einen niedrigen Wert wechseln. Dadurch wird eine niedrige Spannung in der Leitung 97 erzeugt, und zwar unabhängig vom Zustand des Komparators 92. Dies schließt die Schalter 86 und 90 und verändert den Verstärkungsfaktor A des Differentialverstärkers 84 von dem zunächst niedrigen auf den hohen Wert. Damit wird die Lagesteuerung vom Zustand niedriger Ansprechempfindlichkeit auf den Zustand hoher Ansprechempfindlichkeit umgeschaltet. Wenn weiterhin der Deichselwinkel A(t) von −11° zurück auf −4° wechselt, schaltet der Auslaß des Komparators 94 von dem niedrigen auf den hohen Wert zurück, um den Differentialverstärker 84 auf den Zustand des niedrigen Verstärkungsfaktors zurückzuschalten und die Lagesteuerung in der niedrigen Ansprechempfindlichkeit arbeiten zu lassen. Der spezielle negative Deichselwinkel A(t), bei dem der Komparator 94 seinen Zustand wechselt hängt ab von dem Niveau der Bezugsspannung Vr2 und der vorgesehenen Hysteresis des Komparators 94. Aufgrund dieser Anordnung ist die Arbeitsweise der neuen Lagesteuerung bezogen auf die Längsachse 20 der Erntemaschine im wesentlichen symmetrisch.

Wenn aufgrund irgend einer Fehlfunktion die Spannung V(s) am Abgriff des Fühlers 60 für den Winkel des Auswerfers auf den Wert der Bezugsspannung Vr5 ansteigt, aber unter dem Niveau der Bezugsspannung Vr6 des Komparators 122 bleibt, schaltet der normalerweise hohe Auslaßwert des Komparators 120 auf einen niedrigen Wert. Da dieser niedrige Wert mit dem (−)-Einlaß der Umkehreinrichtung 102 verbunden ist, wird der Auslaß der Umkehreinrichtung auf einem hohen Wert gehalten. Damit werden der Relais-Treiber 108 und das Relais 110 wirkungslos und es wird verhindert, daß die Ausgangsleitung 68 eingeschaltet wird. Dieser Zustand verhindert eine automatische Betätigung des Vorsteuerventils 36 und verhindert somit, daß der Fluidmotor 26 den Auswerfer 14 im Gegenuhrzeigersinne unter dem Einfluß der automatischen Lagesteuerung 64 verschwenkt. Für die Bedienungsperson bleibt es nach wie vor möglich die Lage des Auswerfers 14 mittels Hand zu steuern, und zwar durch Verwendung der Steuerschalteinheit 50. Jedoch wird in diesem Zustand einer Fehlfunktion die automatische Lagesteuerung darauf festgelegt, daß eine automatische Verschwenkung des Auswerfers 14 nach Fig. 1 im Gegenuhrzeigersinne verhindert wird.

Es wird weiterhin darauf hingewiesen, daß wenn ein Zustand gleich einem offenen Kreis in dem Potentiometer des Winkelfühlers 60 für den Auswerfer auftritt die Spannung V(s) am Abgriff des Fühlers 60 durch den Widerstand R1 auf einen Wert von +8 Volt gezwungen wird. Diese Abgriffsspannung V(s) bei offenem Kreis führt dazu, daß der normalerweise hohe Auslaßwert des Komparators 120 auf einen niedrigen Wert übergeht. Dadurch wird eine automatische Verschwenkung des Auswerfers 14 in der beschriebenen Weise verhindert. Diese gleiche, einem offenen Kreis entsprechende Abgriffsspannung führt auch dazu, daß der normalerweise hohe Auslaß des Komparators 122 auf einen niedrigen Wert übergeht, so daß der normalerweise geschlossene Schalter 104 geöffnet wird. Wenn dieser Schalter 104 geöffnet ist, bleibt der Auslaß des Trennverstärkers 106 auf einem hohen Wert. Dadurch wird verhindert, daß der Relaistreiber 112 und das Relais 114 die Auslaßleitung 66 abgeschaltet halten. Eine Abschaltung der Leitung 66 verhindert eine automatische Schwenkung des Auswerfers 14 im Uhrzeigersinne. Diese Situation mit offenem Fühlerkreis führt dazu, daß die automatische Lagesteuerung 64 insgesamt außer Wirkung gesetzt wird. Dadurch erhält der Fahrer eine vollständige Kontrolle über die Lage des Auswerfers über den Kontrollschalter 50. Dadurch wird jede ungewünschte automatische oder extreme Verschwenkung des Auswerfers verhindert.

Es wird weiter bemerkt, daß jedes Relais 110 und 114 einen Anschluß aufweist, der permanent und kontinuierlich mit den Einlaßleitungen 40 und 38 über die Ausgangsleitungen 68 bzw. 66 verbunden ist, und daß kein Schalter vorliegt, um die automatische Steuereinheit 64 von den Vorsteuerventilen 34 und 36 des elektrohydraulischen Kreises 24 abzuschalten. Der Fahrer braucht daher nicht irgend einen Schalter zu betätigen, um die automatische Steuereinheit 64 mit den Vorsteuerventilen 34 und 36 zu verbinden, wenn er seine manuelle Steuertätigkeit beendet hat. In ähnlicher Weise sind auch die Anschlüsse der manuellen Richtungssteuereinheit 50 permanent und kontinuierlich mit den Eingangsleitungen 40 und 38 verbunden, so daß die Bedienungsperson zur manuellen Steuerung des Auswerfers 14 nur den Steuerschalter 50 zu betätigen braucht. Die Arbeitsweise der automatischen Lagesteuerung ist daher durch das Fehlen von Umschaltern für den Betriebsmodus außerordentlich vereinfacht im Vergleich zu den eingangs benannten bekannten Systemen.

**Patentansprüche**

1. Automatische Lagesteuerung zur Einstellung des relativen Winkels zwischen dem Erntegutauswerfer (14) einer Erntemaschine (10) und einem nachgezogenen, schwenkbar angelenkten Wagen (18), der das ausgeworfene Erntegut aufnimmt, mit einer auf eine Differenz zwischen den Winkeln zwischen Auswerfer (14) und Längsachse (20) der Erntemaschine (10) einerseits (A(s)) und zwischen dieser (20) und der Längsachse (16) des Wagens (18) andererseits (A(t)) ansprechenden Steuereinrichtung (64) zur Nachstellung des Auswerfers (14), gekennzeichnet durch eine Einrichtung (84, 98, 100) zur automatischen Veränderung der Ansprechempfindlichkeit der Steuereinrichtung (64) in Abhängigkeit von dem Winkel (A(t)) zwischen den Längsachsen von Wagen (18) und Erntemaschine (10), die so ausgebildet ist, daß die Ansprechempfindlichkeit der Steuereinrichtung (64) auf einen niedrigeren Wert in einem der Geradeausfahrt entsprechenden Winkelbereich zwischen den Längsachsen von Erntemaschine (10) und Wagen (18) und auf einen demgegenüber höheren Wert bei Kurvenfahrt einsteuerbar ist.

2. Lagesteuerung nach Anspruch 1, dadurch gekennzeichnet, daß der niedrigere Wert der Ansprechempfindlichkeit der Steuereinrichtung (64) bei Geradeausfahrt so bemessen ist, daß der Auswerfer (14) gegenüber der Erntemaschine (10) über einen zur gleichförmigen Beladung des Wagens (18) ausreichenden Winkel verschwenkbar ist, ohne daß die ständig in Bereitschaft stehende Steuereinrichtung (64) anspricht, während der höhere Wert bei Kurvenfahrt so bemessen ist, daß Erntegutverluste ausgeschaltet sind.

3. Lagesteuerung nach Anspruch 1, gekennzeichnet durch eine Einrichtung (122), mittels der die Steuereinrichtung (64) so weit außer Wirkung setzbar ist, daß selbsttätig eine automatische Schwenkung des Auswerfers (14) aufgrund von Fehlfunktionssignalen in einer Schwenkrichtung ausgeschaltet ist.

4. Lagesteuerung nach Anspruch 1, gekennzeichnet durch eine Einrichtung (120), mittels der die Steuereinrichtung (64) gänzlich außer Wirkung setzbar ist, derart, daß selbsttätig eine automatische Schwenkung des Auswerfers (14) aufgrund von Fehlfunktionssignalen in jeder Schwenkrichtung ausgeschaltet ist.

5. Lagesteuerung nach Anspruch 1, mit je einem, entsprechende Signale erzeugenden Fühler (60, 62) für die beiden variablen Winkel (A(s), A(t)), einer auf die beiden Signale ansprechenden Einrichtung (64) zur Erzeugung eines Fehlersignals und einer auf das Fehlersignal ansprechenden Betätigungseinrichtung (24) zum Nachschwenken des Auswerfers (19), dadurch gekennzeichnet, daß zur Erzeugung des Fehlersignals ein Differentialverstärker (84) mit veränderlichem Verstärkungsfaktor und eine auf das Signal des Fühlers (62) für den Winkel zwischen den Längsachsen von Erntemaschine (10) und Wagen (18) ansprechende Einrichtung (86, 90, 95) zur Veränderung des Verstärkungsfaktors des Differentialverstärkers (84) vorgesehen sind.

6. Lagesteuerung nach einem der Ansprüche 1 bis 5, dadurch gekennzeichnet, daß ein bistabiler Schaltkreis (98, 100) vorgesehen ist, der von einem ersten Zustand in einen zweiten Zustand umschaltet, wenn das Fehlersignal auf ein erstes Grenzwertniveau zunimmt, insb. wenn der Winkel zwischen den Längsachsen von Erntemaschine (10) und Wagen (18) auf einen ersten Grenzwert ansteigt, und der in den ersten Zustand zurückschaltet, wenn das Fehlersignal auf ein zweites Grenzwertniveau anspricht, insb. wenn der Winkel auf einen zweiten Grenzwert abnimmt, wobei das erste Grenzwertniveau des Fehlersignals bzw. der erste Grenzwert des Winkels zwischen den Längsachsen größer als das zweite Grenzwertniveau bzw. der zweite Grenzwert ist, und daß eine Einrichtung (24) vorgesehen ist, welche den Auswerfer (14) nur dann bis zum Nullwerden des Fehlersignals nachschwenkt, wenn sich der bistabile Schaltkreis in seinem zweiten Schaltzustand befindet.

7. Lagesteuerung nach Anspruch 5 und 6, dadurch gekennzeichnet, daß die auf den Schaltzustand des bistabilen Schaltkreises (98, 100) ansprechende Einrichtung eine den Verstärkungsfaktor des Differentialverstärkers (84) steuernde Einrichtung (86, 90, 95) ist.

8. Lagesteuerung nach Anspruch 5 und 6, dadurch gekennzeichnet, daß der Differentialverstärker (84) einen Zustand von hohem Verstärkungsfaktor und einen Zustand von niedrigem Verstärkungsfaktor aufweist und ein Fehlersignal durch Multiplizierung der Differenz zwischen den Winkeln zwischen Auswerfer (14) und Erntemaschine (10) einerseits und Erntemaschine (10) und Wagen (18) andererseits mit dem veränderlichen Verstärkungsfaktor erzeugt und eine Einrichtung (92, 94) vorgesehen ist, die den Differentialverstärker (84) auf den niedrigeren Verstärkungsfaktor umschaltet, wenn sich der bistabile Schaltkreis (98, 100) in seinem ersten Schaltzustand befindet und auf den hohen Verstärkungsfaktor umschaltet, wenn der bistabile Schaltkreis seinen zweiten Schaltzustand einnimmt.

9. Lagesteuerung nach Anspruch 1 oder 2, gekennzeichnet durch einen willkürlich betätigbaren Schalter (50) zwischen einer Spannungsquelle und einer Nachschwenkeinrichtung (24) für den Auswerfer (14) mit wenigstens einem Anschlußkontakt (52, 54), der dauernd mit der Eingangsleitung (38, 40) der Nachschwenkeinrichtung (24) verbunden ist, um die Eingangsleitung bei jedem willkürlichen Schaltsignal am Schalter (50) mit Strom zu speisen, sowie durch eine Relaiseinrichtung (110, 114, 116) zwischen der Spannungsquelle und der Nachsteuereinrichtung (24) mit wenigstens einem Anschluß (66, 68), der dauernd mit der gleichen Eingangsleitung (38, 40) der Nachschwenkeinrichtung (24) wie der Anschlußkontakt des Schalters (50) verbunden ist, um die Eingangsleitung bei jedem Fehlersignal der automatischen Steuereinrichtung (64) mit Strom zu speisen.

10. Lagesteuerung nach Anspruch 5 oder 6, gekennzeichnet durch eine Einrichtung (122), mittels der die Steuereinrichtung (64) teilweise außer Wirkung gesetzt werden kann, wenn das dem Winkel zwischen Erntemaschine (10) und Auswerfer (14) repräsentierende Signal einen vorbestimmten ersten Grenzwert überschreitet.

11. Lagesteuerung nach Anspruch 10, dadurch gekennzeichnet, daß eine Einrichtung (120) vorgesehen ist, mittels der die automatische Steuereinrichtung (64) gänzlich außer Wirkung setzbar ist, wenn das den Auswerferwinkel repräsentierende Signal einen vorbestimmten zweiten Grenzwert überschreitet.

## Claims

1. Automatic positional control system for adjusting the relative angle between a crop material ejector (14) of a harvester (10) and a trailed, pivotally connected wagon (18) which receives the ejected crop material, comprising a control means (64) for adjusting the ejector (14), responsive to a difference between the angles between the ejector (14) and the longitudinal axis (20) of the harvester (10) on the one hand (A(s)) and between the latter (20) and the longitudinal axis (16) of the wagon (18) on the other hand (A(t)), characterised by a means (84, 98, 100) for automatically varying the response sensitivity of the control means (64) in dependence on the angle (A(t)) between the longitudinal axes of the wagon (18) and the harvester (10), which is of such a design that the response sensitivity of the control means (64) can be set to a lower value in a range of angles between the longitudinal axes of the harvester (10) and the wagon (18), corresponding to travel straight ahead, and to a value which is higher than the lower value when travelling along a curved path.

2. A positional control system according to claim 1 characterised in that the lower value of the response sensitivity of the control means (64) in the mode of travelling straight ahead is such that the ejector (14) is pivotable relative to the harvester (10) over an angle which is sufficient for uniformly loading the wagon (18), without the control means (64) which is constantly in a condition of readiness responding, while the higher value in the mode of travelling along a curved path is such that crop material losses are excluded.

3. A positional control system according to claim 1 characterised by a device (122) by means of which the control means (64) can be taken out of action to such a degree that automatic pivotal movement of the ejector (14) because of malfunction signals, in a direction of pivotal movement, is automatically excluded.

4. A positional control system according to claim 1 characterised by a device (120) by means of which the control means (64) can be taken out of action entirely in such a way that automatic pivotal movement of the ejector (14) because of malfunction signals, in any direction of pivotal movement, is automatically excluded.

5. A positional control system according to claim 1 comprising respective sensors (60, 62) for the two variable angles (A(s), A(t)), for producing corresponding signals, a means (64) responsive to the two signals for producing an error signal, and an actuating means (24) responsive to the error signal for pivotal adjusting movement of the ejector (14), characterised in that, for the purposes of producing the error signal, there are provided a differential amplifier (84) having a variable gain factor and a means (86, 90, 95) responsive to the signal of the sensor (62) for the angle between the longitudinal axes of the harvester (10) and the wagon (18), for varying the gain factor of the differential amplifier (84).

6. A positional control system according to one of claims 1 to 5 characterised in that there is provided a bistable circuit (98, 100) which switches over from a first state into a second state when the error signal, increases to a first limit value level, in particular when the angle between the longitudinal axes of the harvester (10) and the wagon (18) rises to a first limit value, and which switches back into the first state when the error signal responds to a second limit value level, in particular when the angle decreases to a second limit value, wherein the first limit value level of the error signal or the first limit value of the angle between the longitudinal axes is greater than the second limit value level or the second limit value, and that there is provided a means (24) which produces pivotal adjusting movement of the ejector (14) until the error signal becomes zero only when the bistable circuit is in its second state.

7. A positional control system according to claim 5 and claim 6 characterised in that the means responsive to the state of the bistable circuit (98, 100) is a means (86, 90, 95) for controlling the gain factor of the differential amplifier (84).

8. A positional control system according to claim 5 and claim 6 characterised in that the differential amplifier (84) has a state of high gain factor and a state of low gain factor and produces an error signal by multiplication of the difference between the angles between the ejector (14) and the harvester (10) on the one hand and the harvester (10) and the wagon (18) on the other hand, with the variable gain factor, and that there is provided a means (92, 94) which switches the differential amplifier (84) to the lower gain factor when the bistable circuit (98, 100) is in its first state and switches it to the high gain factor when the bistable circuit is in its second state.

9. A position control system according to claim 1 or claim 2 characterised by a voluntarily operable switch (50) between a voltage source and a pivotal adjusting motion means (24) for the ejector (14) having at least one connecting contact (52, 54) which is permanently connected to the input line (38, 40) of the pivotal adjusting motion means (24) in order to feed power to the input line with any voluntary switching signal at the switch (50), and further characterised by a relay means (110, 114, 116) between the voltage source and the pivotal adjusting motion means (24) having at least one connection (66, 68) which is permanently connected to the same input line (38, 40) of the pivotal adjusting motion means (24) as the connecting contact of the switch (50) in order to feed power to the input line in the event of any error signal of the automatic control means (64).

10. A positional control system according to claim 5 or claim 6 characterised by a device (122) by means of which the control means (64) can be partially taken out of action when the signal representing the angle between the harvester (10) and the ejector (14) exceeds a predetermined first limit value.

11. A positional control system according to claim 10 characterised in that there is provided a device (120) by means of which the automatic control means (64) can be taken out of action completely when the signal representing the ejector angle exceeds a predetermined second limit value.

**Revendications**

1. Système de commande automatique de position pour le réglage de la position angulaire relative entre la goulotte d'éjection des produits de récolte (14) d'une machine de récolte (10) et une remorque (18) attelée de façon pivotante et remorquée par la machine, cette remorque recevant les produits de récolte éjectés, et comportant un dispositif de commande (64) servant au réglage de la goulotte d'éjection (14) et réagissant à une différence entre les angles formés entre la goulotte d'éjection (14) et l'axe longitudinal (20) de la machine de récolte (10), d'une part, et entre celui-ci (20) et l'axe longitudinal de la remorque (18), d'autre part (A(t)), caractérisé par un dispositif (84, 98, 100) servant à faire varier automatiquement la sensibilité de réponse du dispositif de commande (64) en fonction de l'angle (A(t)) entre les axes longitudonaux de la remorque (18) et de la machine de récolte (10), ce dispositif étant agencé de telle sorte que la sensibilité de réponse du dispositif de commande (64) puisse être réglée à une valeur plus faible dans une gamme de valeurs d'angle entre les axes longitudinaux de la machine de récolte (10) et de la remorque (18) correspondant à la marche en ligne droite, et à une valeur plus élevée par rapport à la précédente en cas de franchissement d'une courbe.

2. Système de commande de position suivant la revendication 1, caractérisé en ce que la valeur plus faible de la sensibilité de réponse du dispositif de commande (64) lors de la marche en ligne droite est calculée de telle sorte que la goulotte d'éjection (14) puisse pivoter par rapport à la machine de récolte (10) sur un angle suffisant pour obtenir un chargement uniforme de la remorque (18), sans que le dispositif de commande (64) constamment en état de veille réagisse, tandis que la valeur plus élevée en virage est calculée de telle sorte que des pertes de produits de récolte soient exclues.

3. Système de commande de position suivant la revendication 1, caractérisé par un dispositif (122) au moyen duquel le dispositif de commande (64) peut être mis au repos à un degré tel qu'un pivotement automatique de la goulotte d'éjection (14) en réponse à des signaux de fonction erronés soit automatiquement exclu dans un sens de pivotement.

4. Système de commande de position suivant la revendication 1, caractérisé par un dispositif (120) au moyen duquel le dispositif de commande (64) peut être mis complètement au repos de telle sorte qu'un pivotement automatique de la goulotte d'éjection (14) en réponse à des signaux de fonction erronés soit automatiquement exclu dans chaque sens de pivotement.

5. Système de commande de position suivant la revendication 1, comportant un capteur ou détecteur (60, 62) engendrant des signaux appropriés pour les deux angles variables (A(s), A(t)), un dispositif (64) réagisssant aux deux signaux pour engendrer un signal d'erreur, et un dispositif d'actionnement (24) réagissant au signal d'erreur pour assurer un pivotement de réglage de la goulotte d'éjection (14), caractérisé en ce qu'il est prévu, pour engendrer le signal d'erreur, un amplificateur différentiel (84) à facteur d'amplification variable et un dispositif (86, 90, 95) réagissant au signal du capteur ou détecteur (62) déterminant l'angle entre les axes longitudinaux de la machine de récolte (10) et de la remorque (18), pour faire varier le facteur d'amplification de l'amplificateur différentiel (84).

6. Système de commande de position suivant l'une quelconque des revendications 1 à 5, caractérisé en ce qu'il est prévu un circuit de commutation bi-stable (98, 100), qui bascule d'un premier état à un second état quand le signal d'erreur croît jusqu'à un premier niveau de valeur limite, en particulier lorsque l'angle entre les axes longitudinaux de la machine de récolte (10) et de la remorque (18) augmentent jusqu'à une première valeur limite, et qui revient au premier état quand le signal d'erreur réagit à un second niveau de valeur limite, en particulier lorsque l'angle diminue jusqu'à une seconde valeur limite, le premier niveau de valeur limite du signal d'erreur ou la première valeur limite de l'angle entre les axes longitudinaux étant supérieur au second niveau de valeur limite ou à la seconde valeur limite, et en ce qu'il est prévu un dispositif (24) qui fait pivoter la goulotte d'éjection (14) jusqu'à annuler le signal d'erreur simplement quand le circuit bi-stable se trouve dans son second état de commutation.

7. Système de commande de position suivant la revendication 5 ou 6, caractérisé en ce que le dispositif réagissant à l'état de commutation du circuit de commutation bi-stable (98, 100) est constitué par un dispositif (86, 90, 95) commandant le facteur d'amplification de l'amplificateur différentiel (84).

8. Système de commande de position suivant la revendication 5 et 6, caractérisé en ce que l'amplificateur différentiel (84) présente un état correspondant à un facteur d'amplification élevé et un état correspondant à un faible facteur d'amplification, et engendre un signal d'erreur par multiplication de la différence entre les angles formés entre la goulotte d'éjection (14) et la machine de récolte (10), d'une part, et entre la machine de récolte (10) et la remorque (18), d'autre part, par le facteur d'amplification variable, et en ce qu'il est prévu un dispositif (92, 94) qui fait inverser l'amplificateur différentiel (84) pour l'amener à son faible facteur d'amplification quand le circuit de commutation bi-stable (98, 100) se trouve à son premier état de commutation, et au facteur d'amplification élevé quand le circuit de comutation bi-stable parvient à son second état de commutation.

9. Système de commande de position suivant la revendication 1 ou 2, caractérisé par un commutateur (50) pouvant être actionné intentionnellement, prévu entre une source de tension et un dispositif (24) de pivotement de réglage prévu pour la goulotte d'éjection (14), et comprenant au moins un contact (52, 54) connecté de façon permanente au conducteur d'entrée (38, 40) du dispositif de pivotement de réglage (24), pour alimenter le conducteur d'entrée en courant pour chaque signal de commutation intentionnel sur le commutateur (50), ainsi que par un dispositif à relais (110, 114, 116) prévu entre la source de tension et le dispositif de commande de réglage (24) et comprenant au moins une connexion (66, 68) qui est reliée de façon permanente au même conducteur d'entrée (38, 40) du dispositif de pivotement de réglage (24) que le contact du commutateur (50), pour alimenter le conducteur d'entrée en courant pour chaque signal d'erreur du dispositif de commande automatique (64).

10. Système de commande de position suivant la revendication 5 ou 6, caractérisé par un dispositif (122) au moyen duquel le dispositif de commande (64) peut être mis partiellement au repos quand le signal représentant l'angle entre la machine de récolte (10) et la goulotte d'éjection (14) dépasse une première valeur limite prédéterminée.

11. Système de commande de position suivant la revendication 10, caractérisé en ce qu'il est prévu un dispositif (120) au moyen duquel le dispositif de commande automatique (64) peut être mis complètement au repos quand le signal représentant l'angle de la goulotte d'éjection dépasse une seconde valeur limite prédéterminée.

FIG. 1

10

13

0 070 015

18

14

20

N(+)

A(t)

N(-)

16

A(s)

12

FIG. 2

FIG. 3a

FIG. 3b